# FASCICULE DE BREVET EUROPEEN

(11) **EP 0 733 923 B1**
(45) Date de publication et mention de la délivrance du brevet: **25.10.2006**
(21) Numéro de dépôt: 96200683.9
(22) Date de dépôt: 13.03.1996
(51) Int. Cl.: G02B 6/42, F21V 8/00

(54) **Dispositif d'illumination via un faisceau de fibres optiques et procédé de réalisation d'un tel dispositif**
Beleuchtungsanordnung mit einem Bündel von optischen Fasern und Verfahren zur Erzeugung einer solchen Anordnung
Illumination apparatus using an optical fibre bundle and method of realizing such an illumination apparatus

(30) Priorité: 22.03.1995 FR 9503351
(43) Date de publication de la demande: 25.09.1996
(73) Titulaire: Koninklijke Philips Electronics N.V., 5621 BA Eindhoven (NL)
(72) Inventeur: Ansems, Johan, 75008 Paris (FR); Dufresne, Pierre, 75008 Paris (FR); Hernandez, Antonio, 75008 Paris (FR)
(74) Mandataire: van Oudheusden-Perset, Laure E.

(56) Documents cités:
- WO-A-91/11743
- DE-A- 2 843 553
- DE-U- 8 901 898
- FR-A- 2 417 122
- GB-A- 2 044 908
- US-A- 3 198 059
- US-A- 4 241 382
- US-A- 4 747 660
- US-A- 5 099 399
- US-A- 5 373 217
- PATENT ABSTRACTS OF JAPAN vol. 009, no. 093 (P-351), 23 Avril 1985 & JP-A-59 219715 (OLYMPUS KOGAKU KOGYO KK), 11 Décembre 1984,

## Description

La présente invention concerne un dispositif d'illumination via un faisceau de fibres optiques, comportant une lampe disposée sur un axe optique, une unité optique disposée coaxialement à la lampe, pour assurer une concentration de lumière en provenance de la lampe autour d'un point image axial et un embout de faisceau de fibres optiques disposé coaxialement à, et en aval de, l'unité optique, ledit embout comportant une pièce tubulaire dont la partie située en regard de l'unité optique enferme un barreau transparent destiné à recevoir par sa face terminale proximale la lumière concentrée en provenance de l'unité optique et à transmettre cette lumière jusqu'à sa face terminale opposée, la partie opposée de la pièce tubulaire recevant une portion terminale d'un faisceau de fibres optiques appliquée par sa face terminale correspondante contre ledit barreau transparent de façon à recevoir la lumière transmise par le barreau transparent pour la transmettre à son tour jusqu'à l'extrémité opposée dudit faisceau de fibres destinée à jouer le rôle d'émetteur de lumière.

L'invention concerne aussi un procédé pour la réalisation d'un dispositif d'illumination.

Un tel dispositif d'illumination s'applique dans l'éclairage décoratif, notamment pour la mise en valeur de pièces dans un musée, d'éléments architecturaux, d'objets dans une vitrine d'un magasin de vente, etc.

Un dispositif d'illumination via un faisceau de fibres optiques, qui comporte une lampe, une unité optique qui procure une concentration de lumière autour d'un point image axial, un embout de faisceau de fibres optiques comportant une pièce cylindrique qui d'une part serre l'extrémité du faisceau de fibres optiques et d'autre part enferme un barreau transparent appliqué à l'extrémité du faisceau de fibres optiques, est connu du document EP-A-0 082 691. Ce document donne des moyens pour obtenir une répartition régulière de la lumière à la surface du faisceau de fibres, avec le moins de pertes possible.

Le document US 4, 241, 382 divulgue un dispositif d'illumination via un faisceau de fibres optiques comprenant notamment une lame transparente concave destinée à rediriger les rayons lumineux vers un faisceau de fibres optiques de telle sorte qu'ils entrent dans les fibres avec une mesure d'angle inférieure à un angle critique. Un avantage d'un tel système est de faire entrer un plus grand nombre de rayons lumineux dans le faisceau de fibres optiques et donc de permettre une illumination plus efficace du faisceau de fibres optiques.

Le document US 5, 099, 399 divulgue un dispositif d'illumination via un faisceau de fibres optiques correspondant au préambule ci-dessus. Les rayons lumineux sont focalisés à l'entrée du barreau et entrent dans le barreau avec un angle d'incidence et, selon cet angle, suivent un chemin dans la longueur du barreau, formé de réflexions successives sur ses bords. Ces réflexions successives entraînent une dissipation d'une partie de l'énergie des rayons lumineux.

Un objet de l'invention est d'obtenir encore moins de pertes.

A cet effet, dans un dispositif d'illumination via un faisceau de fibres optiques selon l'invention, l'extrémité du barreau transparent qui est tournée vers l'unité optique et la lampe présente une surface concave et le point image axial autour duquel l'unité optique produit la concentration de lumière est un point image virtuel situé à l'intérieur du barreau.

Ainsi, l'invention est basée sur l'idée de répartir l'effet de concentration de la lumière entre l'unité optique proprement dite et le barreau de verre, ce qui permet d'obtenir, à l'entrée du faisceau de fibres optiques, des rayons lumineux pratiquement parallèles à l'axe longitudinal du faisceau de fibres et donc moins de pertes.

En outre un dispositif d'illumination selon l'invention présente encore l'avantage de procurer un parallélisme des rayons lumineux qui dépend moins de la longueur d'onde de la lumière.

Afin d'optimiser les performances, la surface concave du matériau du barreau constituant avec l'air un dioptre dont le foyer virtuel objet est à l'intérieur du barreau, le point axial autour duquel l'unité optique produit la concentration de lumière est pratiquement confondu avec ce foyer virtuel.

Dans une forme particulière de réalisation, la lampe est un brûleur dit à iodures métalliques et à haute pression.

Ce type de brûleur constitue une source lumineuse de très petite dimension, qui tire parti au mieux des caractéristiques optiques du générateur.

Avantageusement, le brûleur est inclus dans un ensemble démontable muni de moyens de positionnement.

Ainsi le remplacement d'une lampe peut être effectué par un personnel non qualifié sans risque de voir dégrader la précision de positionnement de la lampe.

Dans une autre forme particulière de réalisation, la pièce cylindrique qui serre l'extrémité du faisceau de fibres optiques et enferme un barreau transparent comprend au moins deux parties assemblées l'une à l'autre, l'une serrant l'extrémité du faisceau de fibres optiques et l'autre contenant le barreau transparent.

Plus précisément, la partie qui serre l'extrémité du faisceau de fibres optiques est avantageusement un manchon muni d'une gorge annulaire extérieure dans laquelle est placé un circlip, une extrémité de ce manchon est enfoncée dans la partie contenant le barreau transparent, laquelle partie est elle même assemblée à un tube qui entoure l'autre extrémité du manchon, et le circlip est enfermé entre la partie contenant le barreau transparent et le dit tube:

Avantageusement, le dispositif d'illumination est contenu dans un boîtier et il comprend un système de refroidissement à air pulsé dans lequel l'air pulsé qui entre dans le boîtier lèche d'abord l'embout de faisceau de fibres optiques.

Ainsi le point d'entrée des fibres, qui a habituellement tendance à s'échauffer excessivement, est mieux refroidi.

Afin de faciliter l'exploitation du dispositif d'illumination, ce dernier est avantageusement muni de moyens de fixation de l'embout de faisceau de fibres optiques qui rendent ce dernier amovible de l'extérieur du boîtier.

Afin d'éviter des brûlures au personnel d'entretien, il est avantageux que l'ensemble de la lampe et de l'optique procure, en l'absence de l'embout de faisceau de fibres optiques, une concentration de lumière en un point situé à l'intérieur du boîtier.

L'invention concerne également un procédé de réalisation du dispositif d'illumination tel que défini précedemment, ledit procédé de réalisation étant tel que défini à la revendication 10.

Ces aspects de l'invention ainsi que d'autres aspects plus détaillés apparaîtront plus clairement grâce à la description suivante d'un mode de réalisation constituant un exemple non limitatif :
La figure 1 représente schématiquement en coupe un générateur de lumière alimentant un faisceau de fibres optiques.
La figure 2 est un schéma d'optique illustrant comment la lumière est concentrée dans les fibres optiques.
La figure 3 représente plus en détail et en coupe une forme particulière de réalisation d'une pièce cylindrique destinée d'une part à serrer l'extrémité d'un faisceau de fibres optiques et d'autre part à enfermer un barreau transparent.

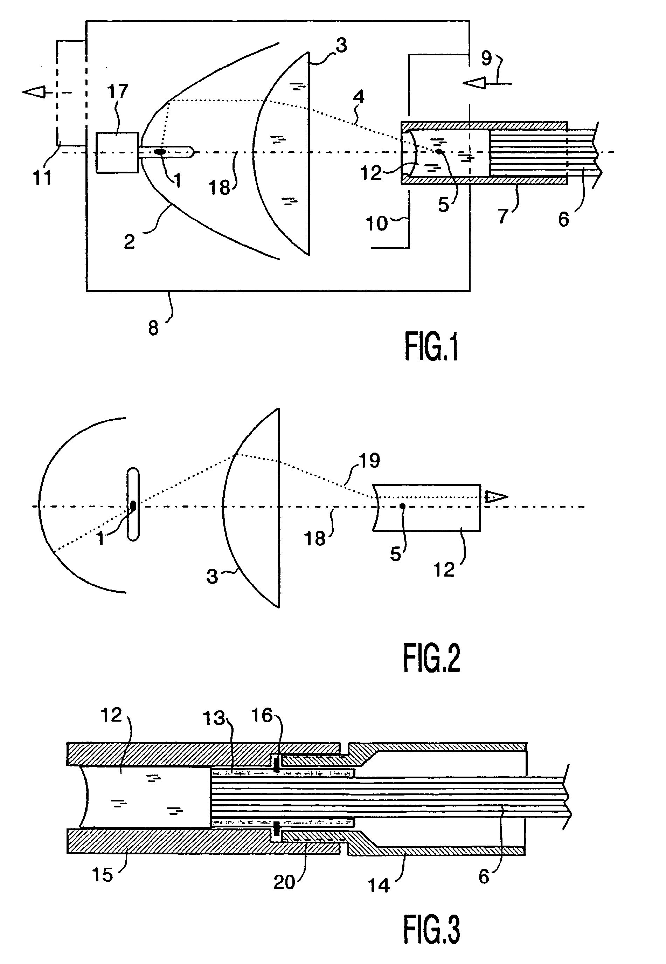

Le générateur de lumière représenté par la figure 1 introduit de la lumière dans un faisceau de fibres optiques figuré schématiquement en 6. Les parties qui concourent à la fourniture de lumière présentent une symétrie de révolution autour d'un axe 18. Ce générateur comporte une lampe dont le point d'émission de lumière est figuré en 1, et une unité optique qui est constituée ici d'un miroir parabolique 2 et d'une lentille convergente plan-convexe 3, dont la face convexe est tournée vers la lampe 1.

La lampe 1 est un brûleur dit à iodures métalliques et à haute pression. L'utilisation d'un tel brûleur est particulièrement appropriée ici car sa source lumineuse est de dimension particulièrement réduite, ce qui permet une plus grande précision optique. Par exemple un brûleur fabriqué par la Demanderesse, et qui a une longueur d'arc très courte, fournit un flux lumineux d'environ 6000 lumens avec une consommation électrique de 100 W. Le brûleur est en outre inclus dans un ensemble 17, démontable, constituant une sorte de cassette munie de moyens de positionnement par rapport à l'unité optique et de bornes de contact électrique solides ou de conducteurs électriques souples munis de prises. Pour la réalisation de ces moyens, non représentés, l'homme du métier peut facilement imaginer différentes solutions (pattes et vis, clips et rainures, glissières, etc). Dans une variante de réalisation, la lampe 1 et le réflecteur 2 peuvent aussi être rendus solidaires l'un de l'autre par le fabricant de la lampe, et dans ce cas on remplace en bloc la lampe et son réflecteur, lorsqu'on atteint la fin de vie de la lampe.

Un rayon lumineux, parmi ceux émis par la lampe, est représenté en 4, il rencontre l'axe 18 en un point 5. L'unité optique 2, 3 procure donc une concentration de lumière autour du point axial 5. Il ne s'agit pas d'un point de focalisation au sens strict, car les rayons qui ont d'abord été réfléchis sur le miroir 2 comme le rayon 4 et les rayons directs ne convergent pas rigoureusement au même point. Néanmoins le point 5 est un point axial de concentration maximale de la lumière par l'unité 2-3. En outre le miroir 2, au lieu d'être parabolique, pourrait être au moins partiellement sphérique avec la source lumineuse 1 au centre de la partie sphérique, de façon que la lumière réfléchie ait la même direction, au niveau de la lentille 3, que celle venant directement de la lampe. Dans une autre variante, on peut aussi prévoir un miroir elliptique et pas de lentille ; néanmoins cela serait plus délicat à mettre en oeuvre, du fait d'une plus grande exigence de précision mécanique.

L'extrémité du faisceau de fibres optiques est maintenu dans un embout. Cet embout comporte une pièce cylindrique figurée schématiquement en 7, qui d'une part serre l'extrémité proximale faisceau de fibres optiques 6 et la maintient en place, et d'autre part enferme un barreau transparent 12, de préférence en verre, dont la face terminale, à droite sur la figure, est plane et est appliquée contre l'extrémité du faisceau 6 de fibres optiques.

L'autre face terminale du barreau 12, à gauche sur la figure, qui est tournée vers l'unité optique 2-3 et la lampe, présente une surface concave et le point axial virtuel 5 autour duquel l'unité optique produit la concentration de lumière est situé à l'intérieur du barreau. Pour la lampe mentionnée plus haut, on utilise par exemple un faisceau de fibres ayant 12 mm de diamètre, constitué par 114 fibres de 1 mm de diamètre chacune, réalisées en "PMMA" (polyméthacrylate), et entourées d'une gaine faite d'un mélange de fibre de verre et de silicone.

Le générateur est contenu dans un boîtier 8 et il comprend un système de refroidissement à air pulsé dans lequel l'air est extrait du boîtier par un ventilateur 11. Cet air entre dans le boîtier par une entrée 9 et est guidé après cette entrée par une gaine 10 qui l'oblige à lécher d'abord l'embout 7 du faisceau de fibres optiques. Le brûleur est alimenté par une alimentation électrique spéciale, connue et qui ne fait pas partie de l'invention, laquelle peut avantageusement être placée à l'intérieur du boîtier de générateur et refroidie en même temps que la lampe et l'embout.

Le boîtier est muni de moyens de fixation de l'embout 7 de faisceau de fibres optiques qui rendent ce dernier amovible de l'extérieur du boîtier. Pour la réalisation de ces moyens, non représentés, l'homme du métier peut là encore facilement imaginer différentes solutions (pattes et vis, canon muni d'un cône élastique serrant le tube par l'extérieur, canon à billes dans lequel le tube,muni de rainures, est empêché de glisser longitudinalement par pénétration des billes dans les rainures, vissage avec un filetage extérieur de l'embout, clipage par ressort, etc).

Le point 5 autour duquel l'ensemble de la lampe et de l'optique procure, en l'absence de l'embout de faisceau, une concentration de lumière est situé à l'intérieur du boîtier 8. Ainsi on évite d'éventuelles brûlures au cas où l'on démonterait l'embout 7 alors que le générateur est allumé.

Bien entendu, la description faite plus haut expliquant comment la lumière est concentrée autour du point axial 5 s'applique en l'absence du barreau 12. En présence de ce dernier, le trajet des rayons lumineux est illustré par la figure 2. Pour illustrer une des variantes mentionnées plus haut, le miroir est ici de forme sphérique, et la lampe est tournée de 90°. A partir de la source 1 le rayon lumineux 19 est rabattu vers l'axe par la lentille 3, rencontre la face d'entrée du barreau 12 avant d'avoir atteint l'axe de symétrie. La surface concave du matériau du barreau constitue avec l'air un dioptre dont le foyer virtuel objet est situé en 5 à l'intérieur du barreau, et le point axial autour duquel l'unité optique produirait la concentration de lumière en l'absence du barreau est pratiquement confondu avec ce foyer virtuel. Le rayon lumineux ne passe donc plus par le point 5 (c'est pourquoi ce dernier est appelé foyer "virtuel") et il est réfracté par le dioptre concave pour devenir parallèle à l'axe 18 et entrer dans les fibres optiques bien dans l'axe.

Grâce à la structure décrite ci-dessus, le générateur est capable d'envoyer dans le faisceau de fibres plus de 50% du flux lumineux émis par le brûleur.

La pièce cylindrique qui serre l'extrémité du faisceau et enferme le barreau transparent est représentée plus en détail par la figure 3. Elle comprend au moins deux parties, ici trois parties, assemblées l'une à l'autre, l'une serrant l'extrémité du faisceau de fibres et une autre contenant le barreau transparent. La partie qui serre l'extrémité du faisceau 6 est un manchon 13 muni d'une gorge annulaire extérieure dans laquelle est placé un circlip 16. Une extrémité, celle de gauche sur la figure, de ce manchon 13 est enfoncée dans une partie cylindrique 15 contenant le barreau transparent 12. Cette partie 15 est elle même assemblée, ici au moyen d'un canon fileté 20, à un tube 14 qui entoure l'autre extrémité, celle de droite sur la figure, du manchon 13 et le circlip 16 est enfermé entre la partie 15, contenant le barreau transparent, et le tube 14. Les pièces 13, 14, 15 sont par exemple en aluminium.

Pour la réalisation de l'embout d'extrémité du faisceau de fibres optiques d'un générateur de lumière :
- on utilise des fibres présentant la caractéristique de se dilater sous l'effet d'un chauffage,
- on place d'abord l'extrémité d'un faisceau de fibres dans un manchon 13, dépassant légèrement hors du manchon,
- on chauffe ce dernier avec les fibres à l'intérieur,
- on coupe l'extrémité du manchon avec les fibres qu'il contient et on polit la tranche puis on la nettoie et on lui apporte éventuellement un traitement optique connu,
- on rétreint le manchon pour serrer encore plus les fibres,
- on passe le manchon au travers du tube 14, en l'introduisant par la droite si ce tube est placé comme sur la figure 3, puis on place le circlip 16, ce qui empêche le manchon 13 de passer à nouveau dans le tube 14,
- et on visse alors la partie cylindrique 15, munie du barreau 12, sur le tube 14.

## Revendications

1. Dispositif d'illumination via un faisceau de fibres optiques (6), comportant une lampe (1) disposée sur un axe optique; une unité optique (2,3) disposée coaxialement à la lampe, pour assurer une concentration de lumière en provenance de la lampe autour d'un point image axial (5); et un embout (7; 13-16) de faisceau de fibres optiques disposé coaxialement à, et en aval de, l'unité optique, ledit embout comportant une pièce tubulaire (7;13-15) dont la partie située en regard de l'unité optique enferme un barreau transparent (12) destiné à recevoir par sa face terminale proximale la lumière concentrée en provenance de l'unité optique et à transmettre cette lumière jusqu'à sa face terminale opposée, la partie opposée de la pièce tubulaire recevant une portion terminale d'un faisceau de fibres optiques (6) appliquée par sa face terminale correspondante contre le dit barreau transparent de façon à recevoir la lumière transmise par le barreau transparent pour la transmettre à son tour jusqu'à l'extrémité opposée dudit faisceau de fibres destinée à jouer le rôle d'émetteur de lumière, ledit dispositif d'illumination étant **caractérisé en ce que** la face terminale du barreau transparent (12) qui est tournée vers l'unité optique et la lampe présente une surface concave, et l'embout (7; 13,14,15) qui enferme le barreau transparent et la portion terminale proximale du faisceau de fibres optiques est disposé par rapport à l'unité optique de façon telle que ledit point image axial (5) autour duquel l'unité optique (2,3) produit la concentration de lumière est un point image virtuel situé à l'intérieur du barreau (12).

2. Dispositif d'illumination selon la revendication 1, **caractérisé en ce que**, la surface concave du matériau du barreau constituant avec l'air un dioptre dont le foyer virtuel objet est à l'intérieur du barreau, l'embout (7; 13,14,15) qui enferme le barreau transparent et la portion terminale proximale du faisceau de fibres optiques est disposé par rapport à l'unité optique de façon que ledit point image axial (5) autour duquel l'unité optique (2,3) produit la concentration de lumière est pratiquement confondu avec ce foyer virtuel.

3. Dispositif d'illumination selon l'une des revendications 1 ou 2, **caractérisé en ce que** la lampe est un brûleur dit à iodures métalliques et à haute pression.

4. Dispositif d'illumination selon la revendication 3, **caractérisé en ce que** le brûleur est inclus dais un ensemble démontable muni de moyens de positionnement.

5. Dispositif d'illumination selon l'une quelconque des revendications précédentes, **caractérisé en ce que** la pièce tubulaire (13-15) qui recoit le barreau transparent et ladite portion terminale de faisceau de fibres optiques comprend au moins deux parties assemblées l'une à l'autre, l'une (13,14) serrant ladite portion terminale de faisceau de fibres optiques et l'autre (15) contenant le barreau transparent.

6. Dispositif d'illumination selon la revendication 5, **caractérisé en ce que** la partie (13, 14) qui serre ladite portion terminale de faisceau de fibres optiques est un manchon (13) muni d'une gorge annulaire extérieure dans laquelle est placé un circlip (16), une extrémité de ce manchon est enfoncée dans l'autre partie (15) recevant le barreau transparent, laquelle partie (13, 14) qui serre ladite portion terminale de faisceau de fibres optiques est elle même assemblée à un tube (14) qui entoure l'autre extrémité du manchon, et le circlip (16) est enfermé entre la partie (15) contenant le barreau transparent et le dit tube (14).

7. Dispositif d'illumination selon l'une quelconque des revendications précédentes, **caractérisé en ce qu'**il est contenu dans un boîtier (8) et il comprend un système de refroidissement à air pulsé (11) dans lequel l'air pulsé qui entre dans le boîtier lèche d'abord l'embout de faisceau de fibres optiques.

8. Dispositif d'illumination selon l'une quelconque des revendications précédentes, **caractérisé en ce qu'**il est contenu dans un boîtier et muni de moyens de fixation de l'embout de faisceau de fibres optiques qui rendent ce dernier amovible de l'extérieur du boîtier.

9. Dispositif d'illumination selon la revendication 8, **caractérisé en ce que** l'ensemble de la lampe et de l'optique procure, en l'absence de l'embout de faisceau de fibres optiques, une concentration de lumière en un point situé à l'intérieur du boîtier.

10. Procédé de réalisation du dispositif d'illumination selon la revendication 1, **caractérisé en ce que**:
- on utilise pour le faisceau de fibres optiques (6) des fibres présentant la caractéristique de se dilater sous l'effet d'un chauffage,
- on place une portion terminale dudit faisceau de fibres optiques (6) dans un manchon (13),
- on chauffe le manchon ainsi muni de ladite portion terminale de faisceau de fibres,
- on coupe l'extrémité libre du manchon avec les portions de fibres qu'elle contient,
- on polit la tranche ainsi formée,
- on usine une extrémité d'un barreau transparent (12) de façon à former une face terminale ayant une surface concave,
- on monte et fixe dans une pièce tubulaire (15) le barreau transparent et une partie dudit manchon ainsi munie de ladite portion terminale correspondante de faisceau de fibres, en appliquant l'une contre l'autre la face terminale du barreau opposée à sa face terminale concave et ladite tranche polie, et
- on place, coaxialement à et en aval de l'ensemble lampe-unité optique constitutif dudit dispositif d'illumination, ladite pièce tubulaire (15) ainsi munie dudit barreau transparent et de ladite partie de manchon enserrant ladite portion correspondante de faisceau de fibres, avec la face concave dudit barreau en regard de l'unité optique, de façon telle que l'unité optique produise une concentration de lumière en un point virtuel situé à l'intérieur du barreau.

## Claims

1. An illumination apparatus for producing light via a bundle of optical fibers (6), the illumination apparatus comprising a lamp (1) disposed on an optical axis; an optical unit (2, 3) coaxially disposed on the lamp to ensure a concentration of light coming from the lamp around an axial image point (5); and a ferrule (7; 13-16) of optical fibers coaxially disposed on and downstream of the optical unit, said ferrule comprising a tubular part (7; 13-15) of which the part facing the optical unit surrounds a transparent rod (12) meant for receiving on its proximate end face the concentrated light coming from the optical unit and for emitting this light to its opposite end face, the opposite portion of the tubular part receiving an end portion of a bundle of optical fibers (6) applied by its corresponding end face to said transparent rod so as to receive the light emitted by the transparent rod so as to emit it in its turn to the opposite end of said bundle of fibers intended to play the role of light emitter, said illumination apparatus being **characterized in that** the end face of the transparent rod (12) which is turned to the optical unit and the lamp has a concave surface and the ferrule (7; 13, 14, 15) which surrounds the transparent rod and the proximate end portion of the bundle of optical fibers is disposed relative to the optical unit in such a way that the axial image point (5) around which the optical unit (2, 3) produces the concentration of light is a virtual image point which is situated inside the rod (12).

2. An illumination apparatus as claimed in claim 1, **characterized in that**, as the concave surface of the material of the rod forms a dioptre with air, whose virtual object focus is in the interior of said rod, the ferrule (7; 13, 14, 15) which holds the transparent rod and the proximate end portion of the bundle of optical fibers is disposed relative to the optical unit in such a way that said axial image point (5) around which the optical unit (2, 3) concentrates the light substantially coincides with said virtual focus.

3. An illumination apparatus as claimed in one of the claims 1 or 2, **characterized in that** the lamp is a high-pressure metal-iodide burner.

4. An illumination apparatus as claimed in claim 3, **characterized in that** the burner is included in a detachable assembly provided with positioning means.

5. An illumination apparatus as claimed in any one of the preceding claims, **characterized in that** the tubular part (13-15) which holds the transparent rod and said end of the optical fiber bundle comprises at least two parts which are coupled to each other (13, 14), one of said parts holding the end of the optical fiber bundle and the other part (15) containing the transparent rod.

6. An illumination apparatus as claimed in claim 5, **characterized in that** the part (13, 14) that holds the end of the optical fiber bundle is a sleeve (13) provided with an exterior neck portion in which a circlip (16) is mounted, one end portion of said sleeve being inserted into the other part (15) containing the transparent rod, the part (13, 14) which holds the end of the optical fiber bundle itself being connected to a tube (14) which surrounds the other end portion of the sleeve, and the circlip (16) being confined between the part (15) containing the transparent rod and said tube (14).

7. An illumination apparatus as claimed in any one of the preceding claims, **characterized in that** said generator is accommodated in a housing (8) and comprises a pulsated-air cooling system (11) in which the pulsated air, which enters the housing, first contacts the ferrule of the optical fiber bundle.

8. An illumination apparatus as claimed in any one of the preceding claims, **characterized in that** the illumination apparatus is accommodated in a housing and provided with means for fixing the ferrule of the optical fiber bundle, so that said ferrule can be removed from outside the housing.

9. An illumination apparatus as claimed in claim 8, **characterized in that** the assembly of the lamp and the optical elements ensures that, in the absence of the ferrule of the optical fiber bundle, the light is concentrated in a point situated inside the housing.

10. A method of manufacturing the illumination apparatus as claimed in claim 1, **characterized in that**:
- fibers that have the characteristic feature of expanding when they are heated are used for the bundle of optical fibers (6),
- an end portion of the bundle of optical fibers (6) is inserted into a sleeve (13),
- the sleeve thus provided with the end portion of the bundle of optical fibers is heated,
- the free end of the sleeve with the fiber portions it contains is cut off,
- the cut surface thus obtained is polished,
- one end of a transparent rod (12) and then subjected to a machining treatment to provide one end face with a concave surface,
- the transparent rod and a part of said sleeve thus provided with said end portion of a bundle of optical fibers is mounted and fixed in a tubular member (15) by connecting the end face of the rod opposite to its concave surface and said polished cut surface to each other, and
- said tubular element (15) thus provided with said transparent rod and said sleeve thus provided with said corresponding end portion of a bundle of optical fibers is disposed coaxially and downstream of the assembly of lamp and optical unit constituting said illumination apparatus, with the concave surface of said rod facing the optical unit, in such a way that the optical unit produces a concentration of light in a virtual point situated in the interior of the rod.

## Patentansprüche

1. Beleuchtungsanordnung mit einem Bündel von optischen Fasern (6) mit einer Lampe (1), auf einer optischen Achse angeordnet; eine optische Einheit (2, 3), koaxial zur Lampe angeordnet, um eine Konzentration des Lichts, das von der Lampe ausgestrahlt wird, um einen axialen Spiegelpunkt zu gewährleisten (5); und eine Hülse (7; 13-16) des Bündels von optischen Fasern, koaxial angeordnet zur und hinter der optischen Einheit angeordnet, wobei die besagte Hülse ein rohrförmiges Teil aufweist (7; 13-15) und das zur optischen Einheit gewendete Teil einen transparenten Stab umschließt (12), bestimmt für die Aufnahme von seiner zentralen Abschlussseite des konzentrierten Lichts, das von der optischen Einheit ausgestrahlt wird, und die Übertragung dieses Lichts an seine gegenüberliegende Abschlussseite, wobei der gegenüber dem rohrförmigen Teil liegende Teil einen Endabschnitt eines Bündels von optischen Fasern aufnimmt (6), zugeführt von seiner entsprechenden Abschlussseite an den besagten transparenten Stab für die Aufnahme des von dem transparenten Stab übertragenen Lichts, um dieses wiederum an das gegenüberliegende Ende des besagten Bündels von Fasern zu übertragen, dafür bestimmt, das Licht abzustrahlen, und die besagte Beleuchtungsanordnung **dadurch gekennzeichnet, dass** die Abschlussseite des transparenten Stabs (12), der zur optischen Einheit und zur Lampe gerichtet ist, eine konkave Fläche aufweist, und die Hülse (7; 13, 14, 15), die den transparenten Stab und den zentralen Endabschnitt des Bündels von optischen Fasern umschließt, so in Bezug auf die optische Einheit angeordnet ist, dass der besagte axiale Spiegelpunkt (5), um den die optische Einheit (2, 3) die Lichtkonzentration erzeugt, ein virtueller, im Innern des Stabs (12) gelegener Spiegelpunkt ist.

2. Beleuchtungsanordnung nach Anspruch 1, **dadurch gekennzeichnet, dass dadurch** die konkave Fläche des Materials des Stabs mit der Luft ein Diopter bildet, dessen angezielter Brennpunkt im Innern des Stabs gelegen ist, die Hülse (7; 13, 14, 15), die den transparenten Stab und den zentralen Endabschnitt des Bündels von optischen Fasern umschließt, so in Bezug auf die optische Einheit angeordnet ist, dass der besagte axiale Spiegelpunkt (5), um den die optische Einheit (2, 3) die Lichtkonzentration erzeugt, praktisch deckungsgleich mit diesem virtuellen Brennpunkt ist.

3. Beleuchtungsanordnung nach einem der Ansprüche 1 oder 2, **dadurch gekennzeichnet, dass** die Lampe ein so genannter Metalliodide-Hochdruckbrenner ist.

4. Beleuchtungsanordnung nach Anspruch 3, **dadurch gekennzeichnet, dass** der Brenner in einer zerlegbaren, mit Positionierungsmitteln versehenen Einheit enthalten ist.

5. Beleuchtungsanordnung gemäß einem beliebigen der vorhergehenden Ansprüche, **dadurch gekennzeichnet, dass** das rohrförmige Teil (13-15), das den transparenten Stab und den besagten Endabschnitt des Bündels von optischen Fasern erhält, mindestens zwei zusammengebaute Teile enthält, wobei das eine (13, 14) den besagten Endabschnitt des Bündels von optischen Fasern festhält und das andere (15) den transparenten Stab enthält.

6. Beleuchtungsanordnung nach Anspruch 5, **dadurch gekennzeichnet, dass** das Teil (13, 14), das den besagten Endabschnitt des Bündels von optischen Fasern festhält, eine Muffe (13) ist, außen mit einer ringförmigen Vertiefung versehen, in der ein Sicherungsring (16) angebracht ist, wobei ein Ende dieser Muffe in das andere Teil (15) gesteckt ist, das den transparenten Stab aufnimmt, und das Teil (13, 14), das den besagten Endabschnitt des Bündels von optischen Fasern festhält, selbst an eine Röhre (14) angebaut ist, die das andere Ende der Muffe umgibt, und der Sicherungsring (16) zwischen dem Teil (15) mit dem transparenten Stab und der besagten Röhre (14) eingeschlossen ist.

7. Beleuchtungsanordnung gemäß einem beliebigen der vorhergehenden Ansprüche, **dadurch gekennzeichnet, dass** sie in einem Gehäuse (8) enthalten ist und ein Umluft-Kühlsystem (11) enthält, in dem die Umluft, die in das Gehäuse kommt, zuerst auf die Hülse des Bündels von optischen Fasern bläst.

8. Beleuchtungsanordnung gemäß einem beliebigen der vorhergehenden Ansprüche, **dadurch gekennzeichnet, dass** sie in einem Gehäuse enthalten und mit Befestigungsmitteln für die Hülse des Bündels von optischen Fasern versehen ist, wodurch dieser vom Gehäuseäußeren abgenommen werden kann.

9. Beleuchtungsanordnung nach Anspruch 8, **dadurch gekennzeichnet, dass** die Lampen- und Optikeinheit ohne die Hülse des Bündels von optischen Fasern das Licht auf einen im Innern des Gehäuses gelegenen Punkt konzentriert.

10. Verfahren zur Erzeugung der Beleuchtungsanordnung nach Anspruch 1, **dadurch gekennzeichnet, dass**:
- man für das Bündel von optischen Fasern (6) solche Fasern verwendet, die die Eigenschaft haben, sich unter der Einwirkung einer Heizung auszudehnen,
- man einen Endabschnitt des besagten Bündels von optischen Fasern (6) in eine Muffe (13) gibt,
- man die somit versehene Muffe des besagten Endabschnitts des Bündels von Fasern erwärmt,
- man das freie Ende der Muffe mit den Faserteilen, welche sie enthält, abschneidet,
- man den so gebildeten Abschnitt poliert,
- man ein Ende eines transparenten Stabs (12) bearbeitet, um eine Abschlussseite mit einer konkaven Fläche zu bilden,
- man in einem rohrförmigen Teil (15) den transparenten Stab und einen Teil der besagten Muffe anbringt und befestigt, die so mit dem besagten, dem Bündel von Fasern entsprechenden Endabschnitt versehen ist, da die Abschlussseite des Stabs, die gegenüber seiner konkaven Abschlussseite liegt, und der besagte polierten Abschnitt aneinander gebracht wurden, und
- man bringt die optische Lampeneinheit zur Bildung der besagten Beleuchtungsanordnung koaxial und dahinter an, wobei das besagte rohrförmige Teil (15) somit mit dem transparenten Stab und dem besagten Teil der Muffe versehen wird, die den besagten, dem Bündel von Fasern entsprechenden Abschnitt festhält, mit der konkaven Seite des besagten Stabs zur optischen Einheit gewendet, damit die optische Einheit eine Konzentration des Lichts an einem im Innern des Stabs gelegenen virtuellen Punkt erzeugt.
